# FASCICULE DE BREVET EUROPEEN

(11) **EP 2 930 308 B1**
(45) Date de publication et mention de la délivrance du brevet: **28.07.2021**
(21) Numéro de dépôt: 14164502.8
(22) Date de dépôt: 11.04.2014
(51) Int. Cl.: F01D 9/04, F01D 25/24, F01D 17/16

(54) **Carter à facettes de turbomachine axiale**
Facettengehäuse einer axialen Turbomaschine
Faceted axial turbomachine housing

(43) Date de publication de la demande: 14.10.2015
(73) Titulaire: Safran Aero Boosters SA, 4041 Herstal (BE)
(72) Inventeur: Hoes, Kris, 3360 Bierbeek (BE); Durie, Angela, 8301 Knokke-Heist (BE); Derclaye, Alain, 4218 Couthuin (BE)
(74) Mandataire: Lecomte & Partners

(56) Documents cités:
- EP-A2- 1 959 094
- WO-A1-2005/047656
- US-A1- 2010 158 685

## Description

### Domaine technique

L'invention a trait à un carter externe de turbomachine axiale. Plus précisément, l'invention a trait à un carter de turbomachine comprenant une paroi circulaire avec une courbure continue. L'invention a également trait à une turbomachine avec un carter.

### Technique antérieure

Un compresseur de turbomachine axiale comprend généralement un carter externe sur lequel sont fixées des rangées d'aubes. Elles peuvent être fixées dans des gorges, ou à l'aide d'axes de fixation traversant la paroi du carter. Cette solution est particulièrement avantageuse lorsque la paroi est essentiellement fine, et qu'elle mesure quelques millimètres. Chaque aube comprend alors une plateforme de fixation avec une surface en contact de la surface interne de la paroi du carter.

Pour des considérations de résistance mécanique, les aubes et les plateformes peuvent être métalliques, par exemple en acier ou en alliage de titane. De son côté, la paroi est réalisée en un matériau composite afin d'alléger le carter. Pour un gain de masse optimal, le composite peut comprendre une résine polymère associée à un renfort avec des fibres de carbone.

Le document EP 2 402 615 A1 divulgue un compresseur axial avec un carter externe réalisé en un matériau composite. Sa paroi supporte trois rangées annulaires d'aubes qui y sont plaquées au niveau de leurs plateformes. La liaison mécanique est assurée par des d'éléments de fixation. Cet enseignement tend à optimiser la rigidité et l'allégement du stator. Toutefois, lors de l'assemblage, on peut observer une concentration de contraintes à l'interface entre la paroi et les plateformes, et éventuellement une dégradation liée à la différence de dureté. Il est ici enseigné d'ajouter des joints d'absorption de chocs à l'interface entre la paroi et les plateformes en cas d'ingestion. Néanmoins, l'élasticité des joints réduit la rigidité, et leur ajout augmente la masse. Cette solution complique le montage.

Cet enseignement optimise la résistance du carter composite. Cependant, sa rigidité reste faible, et peut devenir insuffisante dans le cas de carters externes de compresseur puisque ces carters sont soumis à de fortes contraintes. En cas de perte d'une aube de soufflante, la turbomachine présente de grandes amplitudes de vibration, et le carter est alors fortement sollicité. Soulignons également que les contraintes thermiques et l'humidité amputent la résistance mécanique du carter.

### Résumé de l'invention

### Problème technique

L'invention a pour objectif de résoudre au moins un des problèmes posés par l'art antérieur. Plus précisément, l'invention a pour objectif de réduire les concentrations de contraintes entre une paroi de carter de turbomachine et les plateformes d'aubes. L'invention a également pour objectif de simplifier une paroi de carter recevant des aubes munies de plateformes de fixation.

### Solution technique

L'invention a trait à un carter de turbomachine axiale selon la revendication 1. Le carter, notamment un carter de compresseur, comprend une paroi circulaire avec une surface interne présentant une courbure continue selon la circonférence de la paroi, remarquable en ce que la paroi comprend des facettes planes qui sont adaptées pour recevoir des plateformes d'aubes statoriques, et qui affleurent la surface interne courbe de la paroi, qui présente une épaisseur constante au niveau des facettes.

Selon un mode avantageux de l'invention, les facettes sont agencées en au moins une rangée annulaire, préférentiellement en plusieurs rangées annulaires réparties axialement le long de la paroi et/ou les facettes des différentes rangées sont alignées axialement.

Selon un mode avantageux de l'invention, les facettes et la surface interne présentent une continuité de surface axialement et/ou circonférentiellement à leurs jonctions, les facettes étant inclinées par rapport aux tangentes de la surface interne courbe aux jonctions desdites facettes.

Selon un mode avantageux de l'invention, les facettes sont réparties angulairement selon la circonférence de la surface interne.

Selon un mode avantageux de l'invention, chaque facette comprend au moins un orifice de fixation adapté pour la fixation d'une aube statorique, éventuellement uniquement un seul orifice par facette; les orifices étant agencés en au moins une rangée annulaire.

Selon un mode avantageux de l'invention, la surface interne s'étend en amont et en aval de chaque facette, et/ou la surface interne s'étend selon la circonférence de la paroi entre les facettes.

Selon un mode avantageux de l'invention, chaque ou au moins une facette a une forme de disque, éventuellement certains disques sont tronqués latéralement.

Selon un mode avantageux de l'invention, les facettes d'au moins une rangée sont jointives ponctuellement ou selon des lignes de jonction.

Selon un mode avantageux de l'invention, la surface interne comprend une portion de cône, et/ou une portion de surface sphérique, et/ou une portion de surface d'ellipsoïde de révolution.

Selon un mode avantageux de l'invention, la paroi est une paroi composite avec une matrice organique et un renfort fibreux comportant un empilement de plis fibreux, les plis fibreux étant parallèles aux facettes au niveau des facettes, et courbes au-delà des facettes.

Selon un mode avantageux de l'invention, le carter comprend au moins une rangée annulaire d'aubes statoriques, chaque aube statorique comprenant une plateforme de fixation avec une surface d'appui plane plaquée contre une facette, les plateformes des aubes d'une même rangée étant en contact latéralement les unes des autres ; chaque aube comprenant en outre une pale s'étendant radialement vers l'intérieur depuis la plateforme.

Selon un mode avantageux de l'invention, chaque plateforme d'aube comprend au moins une zone de moindre épaisseur et une zone en surépaisseur, chaque surface d'appui de plateforme étant formée sur la zone en surépaisseur et est inscrite dans une facette correspondante, préférentiellement chaque surface d'appui est circulaire.

Selon un mode avantageux de l'invention, chaque plateforme de fixation d'aube comprend un axe de fixation traversant une facette associée.

Selon un mode avantageux de l'invention, la surface interne est continue et/ou lisse selon la direction circonférentielle de la paroi.

Selon un mode avantageux de l'invention, la surface interne prolonge axialement et/ou circonférentiellement les facettes, éventuellement directement.

Selon un mode avantageux de l'invention, les limites des facettes sont des lignes formées dans la surface interne.

Selon un mode avantageux de l'invention, les facettes sont séparées les unes des autres par la surface interne.

Selon un mode avantageux de l'invention, les facettes sont prolongées par la surface interne, préférentiellement directement.

Selon un mode avantageux de l'invention, les facettes et la surface interne de la paroi forment une continuité de surface.

Selon un mode avantageux de l'invention, les disques d'au moins une rangée annulaire de facettes sont tronqués en direction des autres facettes de la rangée.

L'invention a également trait à un compresseur de turbomachine axiale comprenant un carter, remarquable en ce que le carter est conforme à l'invention.

L'invention a également trait à une turbomachine axiale comprenant un carter, remarquable en ce que le carter est conforme à l'invention, et en ce que la turbomachine comprend un compresseur, le carter étant le carter du compresseur et étant formé de deux demi-carters annulaires comprenant chacun des brides axiales d'assemblage des demi-carters.

Selon un mode avantageux de l'invention, la turbomachine comprend un compresseur conforme à l'invention.

### Avantages apportés

L'invention permet de réduire les concentrations de contraintes entre une paroi de carter et les plateformes d'aubes. Ce bénéfice est atteint grâce aux formes planes des facettes, compatibles avec les surfaces planes des plateformes. Ces surfaces sont économes à produire car les plateformes peuvent être simplement usinées par fraisage.

Aussi, ce mode de fixation améliore la précision d'orientation des aubes puisqu'elles s'appuient sur des surfaces planes, réalisées avec précision. La précision de l'orientation d'une aube est indépendante de la positon de l'aube par rapport à sa facette, éventuellement tant que la surface d'appui de la plateforme de l'aube reste inscrite dans la facette, et/ou tant que l'axe de fixation reste engagé dans l'orifice de fixation correspondant.

Le contact entre les surfaces planes favorise un réglage aisé de l'orientation des cordes des aubes, ou calage, puisque les concentrations de contraintes, et donc l'abrasion est réduite lorsqu'une aube pivote sur sa facette.

### Brève description des dessins

La figure 1 représente une turbomachine axiale selon l'invention.
La figure 2 est un schéma d'un compresseur de turbomachine selon l'invention.
La figure 3 esquisse une vue axiale du carter du compresseur de turbomachine selon l'invention.
La figure 4 illustre une aube de stator avec une plateforme en contact d'une facette du carter selon l'invention.
La figure 5 ébauche un carter avec une rangée annulaire d'aubes dont les plateformes sont en contact latéralement les unes des autres, la rangée étant vue radialement vers l'extérieur selon l'invention.
La figure 6 représente une portion de paroi de carter sur laquelle est fixée une aube selon l'invention.

### Description des modes de réalisation

Dans la description qui va suivre, les termes intérieur et extérieur renvoient à un positionnement par rapport à l'axe de rotation d'une turbomachine axiale. La direction axiale est selon l'axe de rotation, et la direction radiale est perpendiculaire à la direction axiale. La direction latérale est entendue selon la circonférence, et peut être perpendiculaire à l'axe.

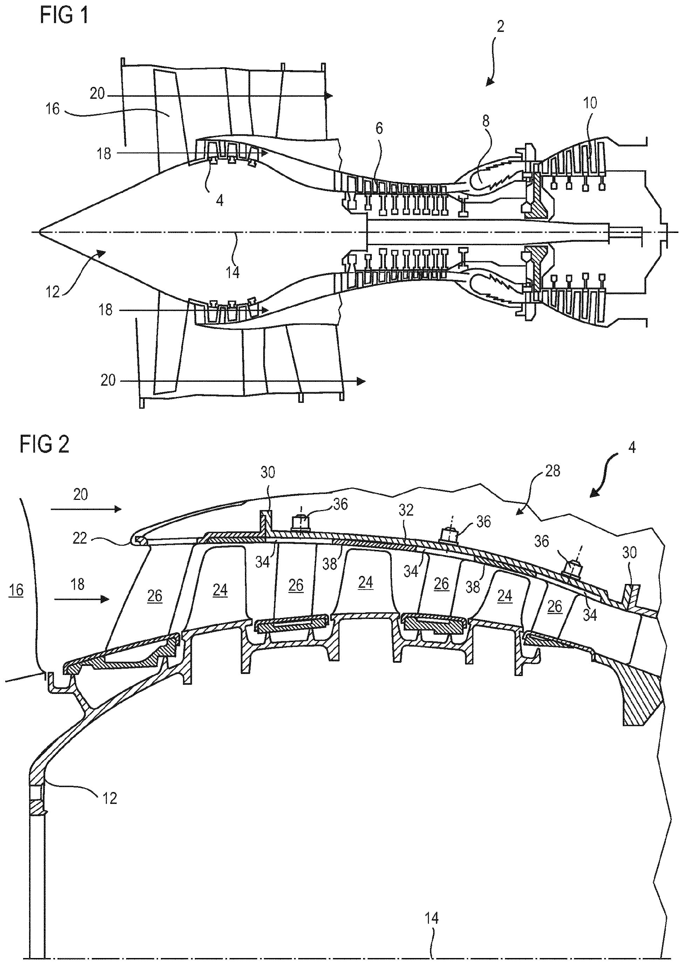

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6.

Les compresseurs comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés à l'aide de cloisons cylindriques, ou viroles, qui peuvent être intérieures et/ou extérieures.

La figure 2 est une vue en coupe d'un compresseur d'une turbomachine axiale telle que celle de la figure 1. Le compresseur peut être un compresseur basse-pression 4. On peut y observer une partie du fan 16 ainsi que le bec de séparation 22 du flux primaire 18 et du flux secondaire 20. Le rotor 12 peut comprendre plusieurs rangées d'aubes rotoriques 24, en l'occurrence trois.

Le compresseur basse-pression 4 peut comprendre au moins un redresseur, préférentiellement plusieurs redresseurs, en l'occurrence quatre, qui contiennent chacun une rangée annulaire d'aubes statoriques 26. Chaque redresseur est associé au fan 16 ou à une rangée d'aubes rotoriques 24 pour en redresser le flux d'air, de sorte à convertir la vitesse du flux en pression.

Le compresseur comprend au moins un carter 28. Le carter 28 peut présenter une forme généralement circulaire ou tubulaire. Il peut être un carter externe de compresseur et peut être en matériaux composites, ce qui permet de réduire sa masse tout en optimisant sa rigidité. Le carter 28 peut comprendre des brides de fixation 30, par exemple des brides annulaires de fixation 30 pour la fixation du bec de séparation 22 et/ou pour se fixer à un carter intermédiaire de soufflante de la turbomachine. Le carter assure alors une fonction de lien mécanique entre le bec de séparation 22 et le carter intercalaire 32. Le carter assure également une fonction de centrage du bec de séparation 22 par rapport au carter intermédiaire, par exemple à l'aide de ses brides annulaires. Les brides annulaires 30 peuvent être en composite et comprendre des orifices de fixation (non représentés) pour permettre une fixation par boulons, ou par lockbolts. Les brides 30 peuvent comprendre des surfaces de centrage, tels des orifices de centrage.

La carter 28 comprend une paroi 32 généralement circulaire ou en arc de cercle, dont les bords axiaux peuvent être délimités par les brides 30. La paroi 32 peut présenter un profil de révolution autour de l'axe de rotation 14. La paroi 32 peut être en matériau composite, avec une matrice et un renfort. La paroi 32 peut présenter une forme d'ogive, avec une variation de rayon le long de l'axe 14.

Les aubes statoriques 26 s'étendent essentiellement radialement depuis la paroi 32, au niveau de zones annulaires de réception d'aubes. Ces zones peuvent comprendre des moyens de fixations telles des gorges annulaires, ou des orifices de fixation. Les aubes 26 peuvent y être fixées de manière individuelle, ou former des segments d'aubes fixés à la paroi 32. La paroi forme un lien mécanique entre plusieurs aubes de différentes rangées et/ou d'une même rangée d'aubes.

Au moins une ou chaque aube statorique 26 peut comprendre une plateforme 34 de fixation, éventuellement munies d'axes de fixation 36 tels des tiges filetées ou tout autre moyen équivalent. En fonctionnement, les aubes statoriques 26 sont soumises aux efforts de l'écoulement du flux. Ces efforts peuvent être uniquement repris par la paroi 32, en plus du poids propre de chaque aube. Cette configuration signifie que la paroi 32 peut être soumise à l'application d'efforts selon des cercles, lesdits efforts étant variables étant donné que l'écoulement varie lors du fonctionnement de la turbomachine. L'irrégularité des efforts donne naissance à des modes de déformation composés et complexes. La paroi peut comprendre des couches annulaires de matériau abradable 38 entre les plateformes 34 des aubes, de sorte à former une barrière entre le flux primaire 18 et la paroi 32.

Le carter 28, ou du moins sa paroi 32, peut être réalisé en un matériau composite. Le matériau composite peut être réalisé à l'aide d'un renfort fibreux pré-imprégné et durci par autoclave, ou par injection. L'injection peut consister à imprégner un renfort fibreux d'une résine, éventuellement organique, tel de l'époxy. L'imprégnation peut être selon un procédé du type RTM (acronyme anglais pour Resin Transfer Molding).

Le renfort fibreux peut être une préforme tissée, éventuellement de manière tridimensionnelle, ou comprendre un empilement ou un enroulement de différentes feuilles fibreuses ou plis fibreux, qui peuvent s'étendre sur la paroi, et sur au moins une ou plusieurs brides. Les plis peuvent comprendre des fibres de carbone, et/ou des fibres de graphite, et/ou des fibres de verre pour éviter la corrosion galvanique, et/ou des fibres de kevlar, et/ou des fibres de carbotitanium. Grâce aux matériaux évoqués, un carter turbomachine peut mesurer entre 3 et 5 mm d'épaisseur pour un diamètre supérieur à 1 mètre.

Le carter peut être formé de demi-coquilles ou de demi-carters, qui sont séparés par un plan axial. Les demi-coquilles du carter sont reliées à l'aide de brides axiales.

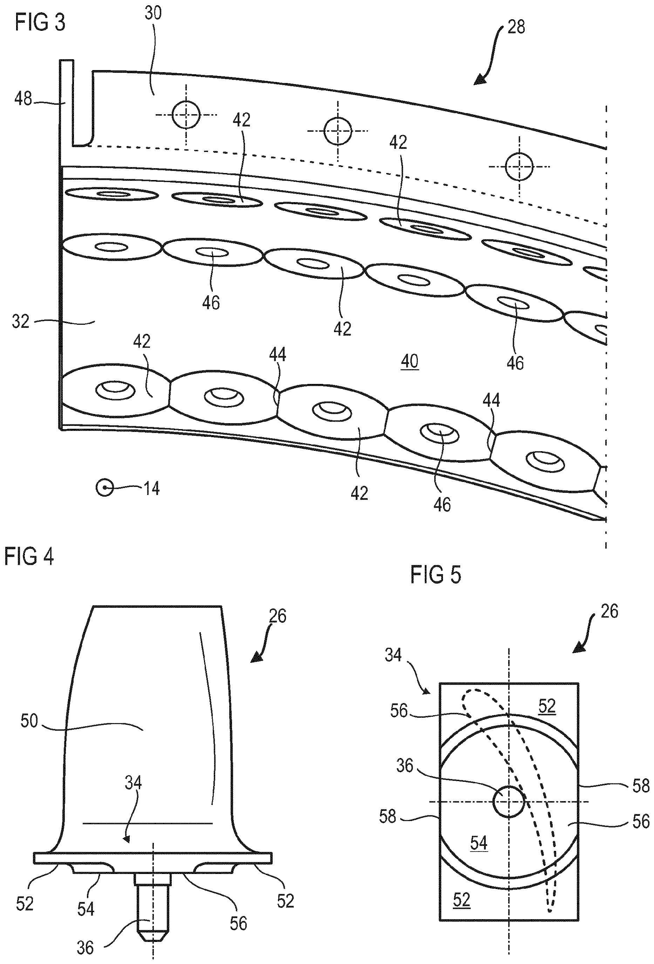

La figure 3 représente une demi-coquille de carter de la turbine axiale, par exemple d'un carter externe de compresseur, éventuellement basse-pression. Le carter est vu axialement, depuis l'amont. Le présent enseignement peut être appliqué à tout carter de la turbomachine, tel un carter de soufflante ou un carter de turbine.

La paroi 32 présente une surface interne courbe 40. La surface interne 40 peut comprendre une courbure continue selon la circonférence de la paroi circulaire et/ou selon la direction axiale. La surface interne 40 peut être circulaire autour de l'axe de rotation 14 de la turbomachine, et éventuellement en regard dudit axe. La paroi 32, ou du moins la surface interne 40 peut être annulaire, éventuellement généralement tubulaire. Selon la circonférence, la courbure de la surface interne 40 peut être monotone, et éventuellement constante. La courbure peut varier axialement, par exemple être plus courbée vers l'aval. La surface interne 40 peut être une portion de surface conique, une portion de surface de sphéroïde, éventuellement sphérique, ou une combinaison de chacun de ces surfaces.

La longueur axiale de la paroi 32 peut représenter la majorité du rayon minimal de la surface intérieure de la paroi, éventuellement sa longueur axiale est supérieure ou égale au rayon minimal de la surface interne de la paroi 32. La longueur axiale est mesurée selon l'axe de rotation 14.

La paroi 32 comprend au moins une facette 42, préférentiellement plusieurs facettes 42, éventuellement disposées au moins une rangée annulaire selon la circonférence de la paroi 32. Chaque facette 42 comprend une surface plane. Les facettes 42 d'une rangée peuvent être réparties angulairement. La paroi 32 peut comprendre plusieurs rangées annulaires de facettes 42, les rangées peuvent être réparties le long axialement de la paroi 32. Au moins une ou chaque facette 42 affleure la surface interne 40 de la paroi. Par affleurer on peut entendre qu'une facette est à niveau, et/ou prolonge, et/ou touche la surface interne.

Les facettes 42 peuvent présenter différentes formes, éventuellement les facettes d'une même rangée présentent la même forme. Chaque rangée peut présenter des formes différentes de facettes. Les facettes 42 peuvent présenter des formes de disques, des formes ovales. Les diamètres moyens des facettes 42 peuvent varier progressivement, ils peuvent augmenter en direction de l'extrémité de la paroi 32 ayant un diamètre minimal.

Les facettes 42 d'une même rangée peuvent être distantes les unes des autres. Elles peuvent être alors séparées par des portions de surface interne qui présentent des courbures continues. Chaque facette 42 d'une même rangée peut être entourée par la surface interne 40. Les facettes 42 d'une même rangée peuvent être tangentes les unes aux autres, elles peuvent être en contact au niveau de points de contact. Ou encore, les facettes d'une même rangée peuvent être tronquées latéralement. Ces facettes peuvent être jointives selon des lignes de jonction 44, qui peuvent former les troncatures. Ces facettes jointives peuvent former une surface continue annulaire qui coupe et/ou divise axialement la surface interne 40 de la paroi 32. La surface interne 40 peut continuer en amont et/ou en aval de la rangée de facettes 42 correspondante.

Une ou chaque facette 42 peut comprendre un moyen de fixation, tel un orifice de fixation 46, qui peut coopérer avec un axe de fixation d'aube. Préférentiellement, chaque orifice de fixation 46 est disposé au centre de la facette associée. Les orifices de fixation 46 peuvent être agencés en une ou plusieurs rangée(s) annulaire(s). Celles-ci peuvent être réparties axialement le long de la paroi 32.

Au moins une ou chaque bride axiale 48 peut être venue de matière avec la paroi 32, tout comme au moins une ou chaque bride annulaire 30. Alternativement, au moins un type de bride, ou chaque bride peut être rapporté sur la paroi. Par exemple, la paroi peut être en composite et les brides peuvent être métalliques et fixées sur la paroi.

La figure 4 représente une aube de turbomachine, par exemple une aube statorique 26 de redresseur de compresseur basse pression. L'aube peut également être une aube de turbine.

L'aube 26 comprend un corps 50, ou pale, formant une surface profilée destinée à s'étendre dans le flux primaire. Sa forme permet de modifier l'écoulement du flux. La tête de l'aube, à l'opposé de la plateforme 34, peut présenter des dispositifs permettant une fixation à une virole interne.

La plateforme 34 peut présenter une forme générale de plaque. Elle peut comprendre au moins une ou deux zones de moindre épaisseur 52, et éventuellement une zone en surépaisseur 54. La zone en surépaisseur 54 peut être entourée par une zone de moindre épaisseur 52, ou être disposée entre deux zones de moindre épaisseur 52. L'axe de fixation 36 peut s'étendre à l'opposé de la pale 50 de l'aube. La ou chaque plateforme 34 comprend une surface d'appui 56 destinée à venir en appui d'une facette de sorte à positionner et orienter l'aube, éventuellement la surface d'appui 56 est formée sur une zone en surépaisseur 54.

La figure 5 représente un modèle de plateforme d'aube vue depuis l'extérieur. La pale 50 de l'aube qui est de l'autre côté de la plateforme 34 est représentée en trait pointillés. Les modèles de plateformes peuvent changer d'une rangée d'aubes à une autre.

La plateforme 34 peut présenter une forme générale de quadrilatère tel un rectangle, un trapèze ou un parallélogramme. Le contour de la plateforme 34 comprend des bords latéraux 58 opposés, pouvant éventuellement venir en contact des bords latéraux 58 voisins des autres aubes d'une même rangée. Les bords latéraux 58 peuvent être coudés ou arqués pour limiter leur rotation lors du serrage de leurs fixations. La plateforme 34 peut présenter une forme de « Z » inversé.

La plateforme 34 est réalisée en métal, préférentiellement en titane. Elle peut également être en composite à matrice organique. Elle peut être venue de matière avec le corps de l'aube 26. Pour respecter une forme précise, son contour est usiné, éventuellement rectifié afin de respecter des tolérances strictes.

La zone en surépaisseur 54 peut présenter une forme de disque, l'axe de fixation 36 étant éventuellement disposé au centre du disque et/ou du rectangle. Le disque peut être tronqué latéralement, par exemple des deux côtés.

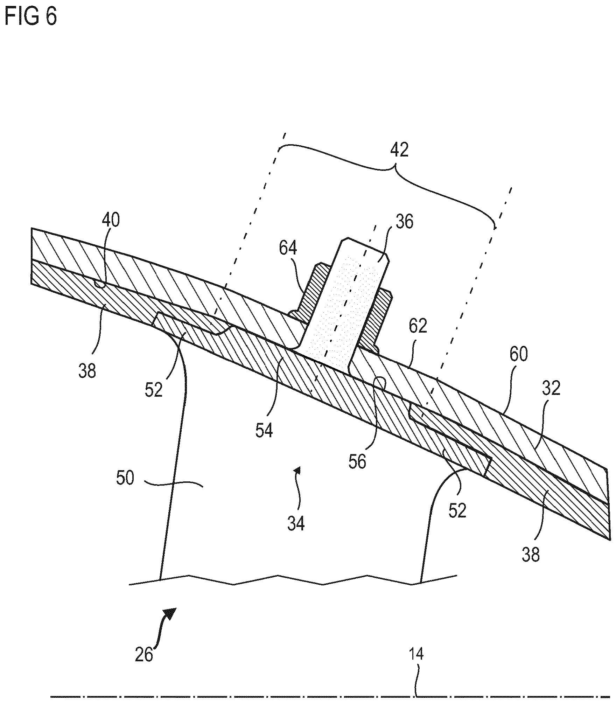

La figure 6 représente une aube statorique 26 fixée à la paroi 32.

La paroi 32 présente une épaisseur constante au niveau de chaque facette. La surface externe 60 de la paroi 42 comprend ainsi un méplat 62 au niveau de chaque facette. Un méplat 62 forme une surface plane, éventuellement lisse. Il peut former une discontinuité de la courbure de la surface externe 60. Le méplat offre une surface plane pour un moyen de serrage 64 de l'axe de fixation 36.

La ou chaque plateforme 34 peut être en contact de la surface interne 40 de la paroi 32 uniquement au niveau de sa surface d'appui 56, sur la zone en surépaisseur 54. La ou chaque zone de moindre épaisseur peut être à distance de la paroi. De l'abradable 38 peut s'insérer entre les zones de moindre épaisseur et la paroi, éventuellement l'abradable 38 s'arrête aux bords de la ou de chaque zone en surépaisseur.

La ou chaque facette 42 forme une discontinuité dans la surface interne 40. Le contour d'au moins une ou de chaque facette 42 peut former une ligne de rupture de la courbure de la surface interne. Tout autour de chaque facette 42, les tangentes de la surface interne peuvent être inclinées par rapport à la facette 42. Les facettes 42 peuvent former des aplatissements dans la surface interne 40, les aplatissements étant vers l'intérieur. La paroi présente une continuité de matière entre les facettes et la surface interne, et éventuellement une discontinuité géométrique.

## Revendications

1. Carter (28) de turbomachine (2) axiale, notamment de compresseur (4 ; 6), le carter (28) comprenant une paroi (32) circulaire avec une surface interne (40) présentant une courbure continue selon la circonférence de la paroi (32), **caractérisé en ce que**
la paroi (32) comprend des facettes (42) planes qui sont adaptées pour recevoir des plateformes (34) d'aubes statoriques (26), et qui affleurent la surface interne courbe (40) de la paroi (32), la paroi (32) présentant une épaisseur constante au niveau des facettes (42).

2. Carter (28) selon la revendication 1, **caractérisé en ce que** les facettes (42) sont agencées en au moins une rangée annulaire, préférentiellement en plusieurs rangées annulaires réparties axialement le long de la paroi (32) et/ou les facettes (42) des différentes rangées sont alignées axialement.

3. Carter (28) selon l'une des revendications 1 à 2, **caractérisé en ce que** les facettes (42) et la surface interne (40) présentent une continuité de surface axialement et/ou circonférentiellement à leurs jonctions, les facettes (42) étant inclinées par rapport aux tangentes de la surface interne courbe (40) aux jonctions desdites facettes.

4. Carter (28) selon l'une des revendications 1 à 3, **caractérisé en ce que** les facettes (42) sont réparties angulairement selon la circonférence de la surface interne (40).

5. Carter (28) selon l'une des revendications 1 à 4, **caractérisé en ce que** chaque facette (42) comprend au moins un orifice de fixation (46) adapté pour la fixation d'une aube statorique (26), éventuellement uniquement un seul orifice par facette ; les orifices (46) étant agencés en au moins une rangée annulaire.

6. Carter (28) selon l'une des revendications 1 à 5, **caractérisé en ce que** la surface interne (40) s'étend en amont et en aval de chaque facette (42), et/ou la surface interne s'étend selon la circonférence de la paroi entre les facettes (42).

7. Carter (28) selon l'une des revendications 1 à 6, **caractérisé en ce que** chaque ou au moins une facette (42) a une forme de disque, éventuellement certains disques sont tronqués latéralement.

8. Carter (28) selon l'une des revendications 1 à 7, **caractérisé en ce que** les facettes (42) d'au moins une rangée sont jointives ponctuellement ou selon des lignes de jonction (44).

9. Carter (28) selon l'une des revendications 1 à 8, **caractérisé en ce que** la surface interne (40) comprend une portion de cône, et/ou une portion de surface sphérique, et/ou une portion de surface d'ellipsoïde de révolution.

10. Carter (28) selon l'une des revendications 1 à 9, **caractérisé en ce que** la paroi (32) est une paroi composite avec une matrice organique et un renfort fibreux comportant un empilement de plis fibreux, les plis fibreux étant parallèles aux facettes (42) au niveau des facettes, et courbes au-delà des facettes (42).

11. Carter (28) selon l'une des revendications 1 à 10, **caractérisé en ce qu'**il comprend au moins une rangée annulaire d'aubes statoriques (26), chaque aube statorique comprenant une plateforme de fixation (34) avec une surface d'appui (56) plane plaquée contre une facette (42), les plateformes (34) des aubes d'une même rangée étant en contact latéralement les unes des autres ; chaque aube comprenant en outre une pale (50) s'étendant radialement vers l'intérieur depuis la plateforme.

12. Carter (28) selon la revendication 11, **caractérisé en ce que** chaque plateforme (34) d'aube comprend au moins une zone de moindre épaisseur (52) et une zone en surépaisseur (54), chaque surface d'appui (56) de plateforme étant formée sur la zone en surépaisseur et est inscrite dans une facette (42) correspondante, préférentiellement chaque surface d'appui (56) est circulaire.

13. Carter (28) selon l'une des revendications 11 à 12, **caractérisé en ce que** chaque plateforme de fixation (34) d'aube comprend un axe de fixation (36) traversant une facette (42) associée.

14. Turbomachine axiale (2) comprenant un carter (28), **caractérisée en ce que** le carter (28) est conforme à l'une des revendications 1 à 13, et **en ce que** la turbomachine comprend un compresseur (4 ; 6), le carter étant le carter du compresseur et étant formé de deux demi-carters annulaires comprenant chacun des brides axiales (48) d'assemblage des demi-carters.

## Patentansprüche

1. Gehäuse (28) für eine axiale Turbomaschine (2), insbesondere für einen Verdichter (4; 6), wobei das Gehäuse (28) eine kreisförmige Wand (32) umfasst, die eine Innenfläche (40) mit einer kontinuierlichen Krümmung entlang des Umfangs der Wand (32) aufweist, **dadurch gekennzeichnet, dass** die Wand (32) ebene Facetten (42) umfasst, die dazu geeignet sind Plattformen (34) der Statorschaufeln (26) aufzunehmen, die mit der gekrümmten Innenfläche (40) der Wand (32) fluchten, wobei die Wand (32) eine konstante Dicke in Höhe der Facetten (42) aufweist.

2. Gehäuse (28) nach Anspruch 1, **dadurch gekennzeichnet, dass** die Facetten (42) in mindestens einer ringförmigen Reihe angeordnet sind, vorzugsweise in mehreren ringförmigen Reihen, die axial entlang der Wand (32) verteilt sind, und / oder die Facetten (42) der verschiedenen Reihen axial ausgerichtet sind.

3. Gehäuse (28) nach einem der Ansprüche 1 bis 2, **dadurch gekennzeichnet, dass** die Facetten (42) und die Innenfläche (40) an ihren Übergängen eine Oberflächenkontinuität axial und / oder in Umfangsrichtung aufweisen, wobei die Facetten (42) in Bezug auf die Tangenten der gekrümmten Innenfläche (40) an den Stoßstelle zu den Facetten geneigt sind.

4. Gehäuse (28) nach einem der Ansprüche 1 bis 3, **dadurch gekennzeichnet, dass** die Facetten (42) winkelig entlang des Umfangs der Innenfläche (40) verteilt sind.

5. Gehäuse (28) nach einem der Ansprüche 1 bis 4, **dadurch gekennzeichnet, dass** jede Facette (42) mindestens eine Befestigungsöffnung (46) umfasst, die zum Befestigen einer Statorschaufel (26) geeignet ist, gegebenenfalls nur eine Öffnung pro Facette, wobei die Öffnungen (46) in mindestens einer ringförmigen Reihe angeordnet sind.

6. Gehäuse (28) nach einem der Ansprüche 1 bis 5, **dadurch gekennzeichnet, dass** die Innenfläche (40) sich stromaufwärts und stromabwärts jeder Facette (42) erstreckt, und / oder die Innenfläche sich um den Umfang der Wand zwischen den Facetten (42) erstreckt.

7. Gehäuse (28) nach einem der Ansprüche 1 bis 6, **dadurch gekennzeichnet, dass** jede oder mindestens eine Facette (42) eine Scheibenform aufweist, wobei möglicherweise einige Scheiben seitlich abgeschnitten sind.

8. Gehäuse (28) nach einem der Ansprüche 1 bis 7, **dadurch gekennzeichnet, dass** die Facetten (42) mindestens einer Reihe punktuell oder entlang der Verbindungslinien (44) zusammenhängend sind.

9. Gehäuse (28) nach einem der Ansprüche 1 bis 8, **dadurch gekennzeichnet, dass** die Innenfläche (40) einen Teil eines Kegels und / oder einen Teil einer Kugelfläche und / oder einen Teil der Oberfläche eines Rotationsellipsoids umfasst.

10. Gehäuse (28) nach einem der Ansprüche 1 bis 9, **dadurch gekennzeichnet, dass** die Wand (32) eine Verbundwand mit einer organischen Matrix und einer faserigen Verstärkung ist, die einen Stapel faseriger Lagen umfasst, wobei die faserigen Lagen auf Höhe der Facetten parallel zu den Facetten (42) und über die Facetten (42) hinaus gekrümmt sind.

11. Gehäuse (28) nach einem der Ansprüche 1 bis 10, **dadurch gekennzeichnet, dass** es mindestens eine ringförmige Reihe von Statorschaufeln (26) umfasst, wobei jede Statorschaufel eine Befestigungsplattform (34) mit einer flachen Auflagefläche (56) umfasst, die gegen eine Facette (42) gedrückt ist, wobei die Plattformen (34) der Schaufeln derselben Reihe in seitlichem Kontakt miteinander stehen, wobei jede Schaufel außerdem ein Schaufelblatt (50) umfasst, das sich von der Plattform radial nach innen erstreckt.

12. Gehäuse (28) nach einem der Ansprüche 11, **dadurch gekennzeichnet, dass** jede Schaufelplattform (34) mindestens eine Zone mit geringerer Dicke (52) und eine Zone mit erhöhter Dicke (54) umfasst, wobei jede Auflagefläche (56) der Plattform auf der Zone mit erhöhter Dicke ausgebildet ist und mit einer entsprechenden Facette (42) in Verbindung steht, wobei vorzugsweise jede Auflagefläche (56) kreisförmig ist.

13. Gehäuse (28) nach einem der Ansprüche 11 bis 12, **dadurch gekennzeichnet, dass** jede Befestigungsplattform (34) der Schaufeln einen Befestigungsstift (36) umfasst, der eine dazugehörige Facette (42) durchdringt.

14. Axiale Turbomaschine (2) umfassend ein Gehäuse (28), **gekennzeichnet dadurch, dass** das Gehäuse (28) einem der Ansprüche 1 bis 13 entspricht, und dass die Turbomaschine einen Verdichter (4; 6) umfasst, wobei das Gehäuse das Gehäuse des Verdichters ist und aus zwei ringförmigen Halbgehäusen, jedes axiale Flansche (48) zum Zusammenbau der Halbgehäuse umfassend, ausgebildet ist.

## Claims

1. Housing (28) of an axial turbomachine (2), in particular a compressor (4, 6), the housing (28) including a circular wall (32) with an internal surface (40) having a continuous curve around the circumference of the wall (32),
**characterized in that**
the wall (32) includes flat facets (42) that are designed to receive platforms (34) of stator vanes (26), and that are flush with the internal curved surface (40) of the wall (32), the wall (32) having a constant thickness at the facets (42).

2. Housing (28) according to claim 1, **characterized in that** the facets (42) are arranged in at least one annular row, preferably in several annular rows distributed axially along the wall (32) and/or the facets (42) from different rows are aligned axially.

3. Housing (28) according to one of Claims 1 to 2, **characterized in that** the facets (42) and the internal surface (40) have an axially and/or circumferentially continuous surface at the junctions of same, the facets (42) being inclined in relation to the tangents of the internal curved surface (40) at the junctions of said facets.

4. Housing (28) according to one of Claims 1 to 3, **characterized in that** the facets (42) are distributed angularly around the circumference of the internal surface (40).

5. Housing (28) according to one of Claims 1 to 4, **characterized in that** each facet (42) has at least one attachment orifice (46) suitable for attaching a stator vane (26), and potentially only one orifice per facet; the orifices (46) being arranged in at least one annular row.

6. Housing (28) according to one of Claims 1 to 5, **characterized in that** the internal surface (40) extends upstream and downstream from each facet (42), and/or the internal surface extends around the circumference of the wall between the facets (42).

7. Housing (28) according to one of Claims 1 to 6, **characterized in that** each or at least one facet (42) is disk shaped, and some disks may be truncated laterally.

8. Housing (28) according to one of Claims 1 to 7, **characterized in that** the facets (42) of at least one row are contiguous individually or along joining lines (44).

9. Housing (28) according to one of Claims 1 to 8, **characterized in that** the internal surface (40) includes a cone portion, and/or a spherical-surface portion, and/or a spheroid-surface portion.

10. Housing (28) according to one of Claims 1 to 9, **characterized in that** the wall (32) is a composite wall with an organic matrix and a fibre reinforcement comprising a stack of fibre plies, the fibre plies being parallel to the facets (42) beside the facets, and curved beyond the facets (42).

11. Housing (28) according to one of Claims 1 to 10, **characterized in that** it includes at least one annular row of stator vanes (26), each stator vane having an attachment platform (34) with a flat bearing surface (56) pressed against a facet (42), the platforms (34) of the vanes in a given row being in lateral contact with each other; each vane also having a blade (50) extending radially inwards from the platform.

12. Housing (28) according to Claim 11, **characterized in that** each vane platform (34) includes at least one thinner zone (52) and one thicker zone (54), each platform bearing surface (56) being formed on a thicker zone and being inscribed within a corresponding facet (42), each bearing surface (56) being preferably circular.

13. Housing (28) according to one of Claims 11 to 12, **characterized in that** each vane attachment platform (34) includes a fitting bolt (36) passing through a related facet (42).

14. Axial turbomachine (2) including a housing (28), **characterized in that** the housing (28) is as claimed in one of Claims 1 to 13, and **in that** the turbomachine includes a compressor (4, 6), the housing being the housing of the compressor and being formed by two annular half-housings each having axial flanges (48) for assembling the half-housings.
